Europäisches Patentamt

European Patent Office

Office européen des brevets

(19)

(11) **EP 1 344 093 B1**

(12) **FASCICULE DE BREVET EUROPEEN**

(45) Date de publication et mention
de la délivrance du brevet:
**27.10.2004 Bulletin 2004/44**

(21) Numéro de dépôt: **01972219.8**

(22) Date de dépôt: **26.09.2001**

(51) Int Cl.$^7$: **G02B 5/18**

(86) Numéro de dépôt international:
**PCT/FR2001/002985**

(87) Numéro de publication internationale:
**WO 2002/027361 (04.04.2002 Gazette 2002/12)**

(54) **PROCEDE OPTIQUE DE DIFFRACTION DE LA LUMIERE, SYSTEME OPTIQUE ET DISPOSITIF CORRESPONDANTS**

OPTISCHES VERFAHREN ZUR BRECHUNG VON LICHT MIT ENTSPRECHENDEM OPTISCHEN SYSTEM UND GERÄT

OPTICAL METHOD FOR LIGHT DIFFRACTION, CORRESPONDING OPTICAL SYSTEM AND DEVICE

(84) Etats contractants désignés:
**AT BE CH CY DE DK ES FI FR GB GR IE IT LI LU MC NL PT SE TR**

(30) Priorité: **26.09.2000 FR 0012237**

(43) Date de publication de la demande:
**17.09.2003 Bulletin 2003/38**

(73) Titulaire: **Jobin Yvon S.A.S.**
**91160 Longjumeau (FR)**

(72) Inventeur: **LEPERE, Didier**
**F-92310 SEVRES (FR)**

(74) Mandataire: **Michelet, Alain**
**Cabinet Harlé et Phélip**
**7, rue de Madrid**
**75008 Paris (FR)**

(56) Documents cités:
**WO-A-99/35523          US-A- 4 915 463**

• **SOUVOROV A ET AL: "ACOUSTIC EXCITATION OF THE CIRCULAR BRAGG-FRESNEL LENS IN BACKSCATTERING GEOMETRY" APPLIED PHYSICS LETTERS, AMERICAN INSTITUTE OF PHYSICS. NEW YORK, US, vol. 70, no. 7, 17 février 1997 (1997-02-17), pages 829-831, XP000687232 ISSN: 0003-6951**

EP 1 344 093 B1

## Description

La présente invention se rapporte à un procédé optique de diffraction de la lumière, ainsi qu'à un système optique et à un dispositif correspondants.

Le domaine d'application de l'invention concerne aussi bien les mesures de longueurs d'onde effectuées sur des faisceaux de lumière monochromatiques que la dispersion de faisceaux polychromatiques, par exemple dans un monochromateur.

L'utilisation de réseaux de diffraction pour la diffraction de la lumière est bien connue. Ainsi, dans le domaine ultraviolet sous vide (longueurs d'onde supérieures à 0,6 nm) ou VUV, on envoie classiquement un faisceau incident sous incidence rasante. sur un réseau de diffraction et on récupère un faisceau renvoyé pour un ordre donné de diffraction, selon un angle de diffraction satisfaisant la loi des réseaux (diffraction de Fresnel). Les réseaux employés, par exemple pour un rayonnement synchrotron VUV, sont typiquement gravés dans des matériaux tels que du silicium ou du SiC CVD, par gravure ionique ou laminage.

La plage de longueurs d'onde pouvant être couverte par de tels réseaux est cependant limitée inférieurement. En effet, à angle d'incidence constant, la réflectivité décroît avec la longueur d'onde. Une efficacité satisfaisante de diffraction peut ainsi difficilement être obtenue en deçà de 0,6 nm.

Pour des diffractions à des longueurs d'onde plus faibles, on met en oeuvre d'autres systèmes tels que des cristaux de diffraction. Dans un tel cristal, ayant une distance entre plans réticulaires donnée, des faisceaux incidents sont diffractés selon la loi de Bragg. Le domaine de longueurs d'onde utilisable est borné supérieurement par la distance entre les plans réticulaires, et il est de plus limité par le fait que la plage angulaire est généralement comprise entre 5° et 85° pour des raisons pratiques. Par exemple, pour un monocristal de silicium orienté (111), pour lequel le double de la distance entre plans réticulaires vaut 0,627 nm, le domaine de longueurs d'onde varie entre 0,055 nm et 0,625 nm.

On sait aussi réaliser des réflecteurs de Bragg par empilement de couches minces sur un substrat. Ils diffractent également la lumière conformément à la loi de Bragg. Dans la suite, on nommera - réflecteur de Bragg - un cristal ou un empilement de couches sur un substrat.

Ainsi, pour couvrir une plage de longueurs d'onde comprise par exemple entre 0,1 nm et 2 nm, il est nécessaire d'avoir recours à deux dispositifs et deux mises en oeuvre complètement distincts, l'un d'entre eux permettant de travailler dans le domaine VUV (réseau de diffraction) et l'autre dans le domaine des rayons X (cristal de diffraction). Or, il s'avère dans certains cas utile de travailler dans une plage couvrant ces deux domaines, par exemple pour un monochromàteur recueillant un faisceau synchrotron.

Le document D1 : Souvorov et al, Acoustic excitation of the circular Bragg-fresnel lens in back scattering geometry, Applied Physics Letter, vol. 70, no. 7, 17 février 1997, p. 829-831, divulgue une lentille de Bragg-Fresnel.

L'invention concerne un procédé optique de diffraction de la lumière mettant en oeuvre un réseau de diffraction, permettant de couvrir un domaine spectral étendu, s'étendant par exemple de l'ultraviolet sous vide aux rayons X durs. Plus précisément, le procédé de mesure optique de l'invention rend possible une prise en compte de longueurs d'onde allant de 0,1 nm à 20 nm ou davantage, au moyen d'un unique dispositif et de manière simple et économique.

L'invention concerne également un système optique et un dispositif de mesure optique ayant les avantages précités.

A cet effet, l'invention a pour objet un procédé de mesure optique dans lequel :

- on envoie au moins un faisceau incident de lumière ayant au moins une longueur d'onde sur une surface d'un système optique ayant une normale, selon une direction formant un angle d'incidence par rapport à la normale, ce système optique comprenant un réflecteur de Bragg et un réseau gravé à la surface du réflecteur de Bragg, et
- on récupère au moins un faisceau renvoyé par le système optique selon une direction de diffraction formant un angle de diffraction par rapport à la normale, après diffraction des faisceaux incidents par le système optique.

Selon l'invention, les longueurs d'onde et l'angle d'incidence d'au moins un des faisceaux incidents sont teis que ce faisceau incident est diffracté par le réflecteur de Bragg et/ou par le réseau.

Ainsi, le réflecteur de Bragg sur lequel est gravé le réseau, est directement utilisé pour la diffraction à de faibles longueurs d'onde.

Le procédé de l'invention s'avère ainsi autoriser une dissociation des diffractions de Fresnel (sur le réseau) et de Bragg (dans le réflecteur de Bragg), et permettre de cette manière un double fonctionnement dans le domaine VUV (réseau) et dans le domaine des rayons X (réflecteur de Bragg).

Le procédé de l'invention permet ainsi de simplifier considérablement le protocole de mesure et d'avoir un équipement plus réduit.

Avantageusement, pour ce faisceau incident diffracté par le réflecteur de Bragg :

- le réflecteur de Bragg est un cristal,
- l'angle d'incidence est compris entre 5° et 80 et/ou
- les longueurs d'onde sont comprises entre 0,1 nm et 0,7 nm.

Dans un mode de mise en oeuvre préféré, le cristal est formé d'un monocristal de silicium orienté (111) et le réseau est directement gravé sur ce cristal. Un tel substrat s'avère particulièrement approprié pour remplir la double fonction de diffraction cristal et diffraction réseau.

Le réseau est avantageusement recouvert d'une couche métallique. On augmente ainsi l'efficacité du réseau.

Préférentiellement, les longueurs d'onde et l'angle d'incidence d'au moins un autre des faisceaux incidents sont tels que ce faisceau incident est diffracté par le réseau.

On exerce ainsi la double fonction du système optique : diffraction par le cristal et diffraction par le réseau

Avantageusement, pour cet autre faisceau incident diffracté par le réseau :

- l'angle d'incidence est au moins égal à 70° et/ou
- les longueurs d'onde de l'autre faisceau incident sont comprises entre 0,6 nm et 150 nm.

Dans une première forme de mise en oeuvre du procédé, les faisceaux incidents sont des faisceaux de lumière polychromatique. On met alors avantageusement en oeuvre le procédé dans un monochromateur, le système optique faisant office d'élément dispersif et étant suivi d'une fente de sélection.

Dans un second mode de mise en oeuvre du procédé, les faisceaux incidents sont des faisceaux de lumière monochromatique. On peut ainsi utiliser le système optique comme étalon primaire pour la mesure de longueurs d'onde.

L'invention concerne également un système optique comprenant un réflecteur de Bragg.

Selon l'invention, il comporte un réseau de diffraction gravé sur le réflecteur de Bragg.

Préférentiellement, le réflecteur de Bragg est un cristal et le cristal est formé d'un monocristal de silicium.

Ce système optique permet de mettre en oeuvre le procédé de l'invention.

L'invention a également pour objet un dispositif de mesure optique comprenant :

- un système optique conforme à l'invention,
- des moyens d'éclairage de la surface du système optique au moyen d'au moins un faisceau incident de lumière,
- des moyens de récupération d'au moins un faisceau renvoyé par le système optique après diffraction des faisceaux incidents par le système optique, et
- des moyens: de rotation relative du système optique par rapport aux faisceaux incidents.

L'invention s'applique aussi à l'utilisation du procédé ou du dispositif selon l'invention pour un étalonnage primaire pour la mesure de longueurs d'onde (faisceau de lumière monochromatique) ou pour une dispersion dans un monochromateur ou spectrographe (faisceau de lumière polychromatique).

La présente invention sera mieux comprise et illustrée au moyen des exemples suivants de réalisation et de mise en oeuvre, nullement limitatifs, en référence aux dessins annexés sur lesquels :

- la figure 1 est un schéma de principe illustrant un système optique utilisé dans le procédé selon l'invention (les échelles ne sont pas respectées pour des questions de visibilité) ;
- la figure 2 montre un profil, mesuré avec un microscope à effet tunnel (STM), d'une modulation enregistrée sur un système optique utilisé pour mettre en oeuvre un procédé de mesure optique selon l'invention ;
- la figure 3 est un schéma de principe de mise en oeuvre du procédé de mesure optique selon l'invention en mode cristal de diffraction ;
- la figure 4 est un schéma de principe de la mise en oeuvre du procédé de mesure optique selon l'invention dans un mode réseau de diffraction ;
- la figure 5 représente pour le système optique de la figure 2 et en mode cristal de diffraction, la réflectivité en fonction de la différence de l'angle d'incidence à l'angle de Bragg pour une longueur d'onde égale à 0,154 nm ;
- la figure 6 représente pour le système optique de la figure 2 et en mode réseau de diffraction, l'efficacité en fonction de l'angle d'incidence pour les ordres 1 et -1, pour une longueur d'onde égale à 1,33 nm ;
- la figure 7 représente pour le système optique de la figure 2 et en mode réseau de diffraction, l'efficacité en fonction de l'angle d'incidence pour les ordres 1 et -1, pour une longueur d'onde égale à 1,55 nm ; et
- la figure 8 montre un dispositif de mesure optique utilisé pour mettre en oeuvre un procédé de mesure optique selon l'invention.

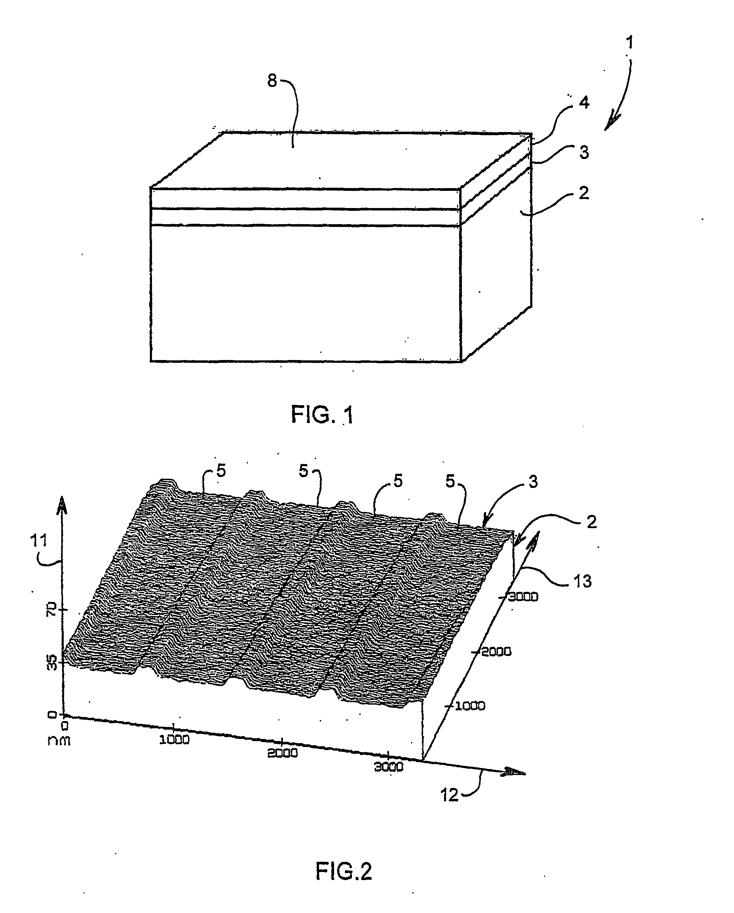

Un système optique 1 (figure 1) comprend un réflecteur de Bragg 2 et un réseau 3 gravé sur le substrat du réflecteur de Bragg 2 à une surface 8 du système optique 1. Le réseau 3 est recouvert d'une couche métallique 4, par exemple constituée d'une couche de 10 nm d'or.

Le réflecteur de Bragg 2 est avantageusement constitué d'un monocristal de silicium d'orientation (111). Il est super-poli, avec une erreur de pente de quelques dixièmes d'arcsecondes et une rugosité de quelques Å. Ce polissage permet le fonctionnement du système optique 1 en réflexion rasante, pour une utilisation en ultraviolet sous vide mettant en oeuvre une diffraction par le réseau 3.

Dans un mode de réalisation alternatif, le réflecteur de Bragg 2 est un empilement de couches. Il peut être lui-même déposé sur un substrat.

Le réseau de diffraction 3 est par exemple inscrit par enregistrement holographique et usinage ionique. Il comprend des traits 5 (figure 2) ayant une profondeur par exemple inférieure à 10 nm, ce qui en fait un réseau très peu modulé. Le profil du réseau 3 peut être obtenu par microscopie à effet tunnel, en hauteur (profondeur de gravure), largeur et longueur (respectivement axes 11, 12 et 13, en nm). La densité N de traits du réseau 3 par mm est par exemple égale à 1200.

Pour les traits 5, différentes formes (sinusoïdaux, triangulaires, en créneau) et différentes lois densités (constantes ou variables) peuvent être utilisées.

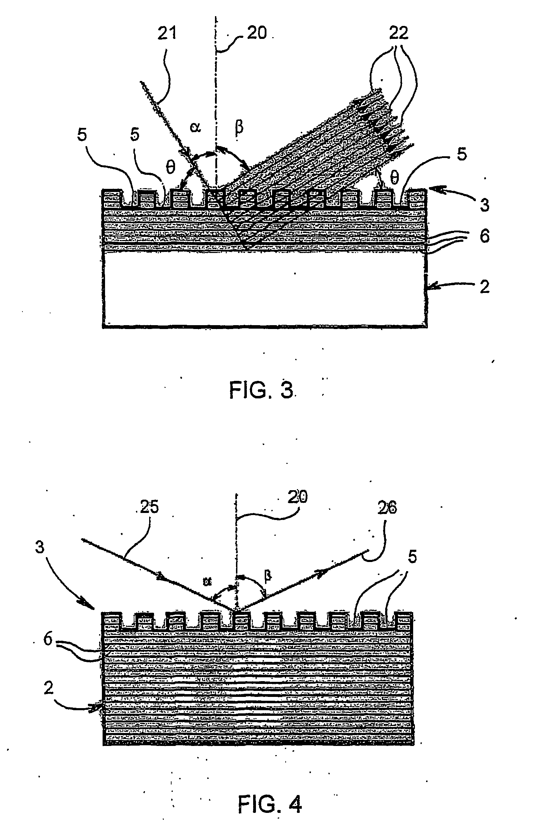

On emploie le système optique 1 pour couvrir un domaine spectral s'étendant de l'ultraviolet sous vide aux rayons X durs. Ainsi, selon une première mise en oeuvre (figure 3), on envoie un faisceau incident 21 ayant une longueur d'onde inférieure à 0,6 nm sur la surface 8. Le système optique 1 ayant une normale 20 à la surface 8, le faisceau incident 21 forme par rapport à cette normale, un angle $\alpha$ et par rapport aux plans réticulaires 6 du réflecteur de Bragg 2 (c'est-à-dire en l'espèce par rapport à la surface 8), un angle $\theta$. L'angle $\alpha$ est préférentiellement compris entre 5° et 80°.

Le système optique 1 se comporte alors comme un cristal de diffraction classique, les faisceaux diffractés 22 par le réflecteur de Bragg 2 formant avec la normale 20, un angle $\beta$ égal à l'angle $\alpha$ (figure 3). Ce système 1 peut ainsi notamment être utilisé comme étalon de longueur d'onde ou comme un élément diffractant d'un monochromateur à rayons X.

L'absence de perturbations de la diffraction de Bragg dans le réflecteur de Bragg 2 par le réseau 3 peut s'expliquer par le fait que la profondeur des traits 5 du réseau est suffisamment petite par rapport à la profondeur de pénétration du faisceau incident dans le réflecteur de Bragg 2, lorsque ce faisceau incident a des longueurs d'onde suffisamment petites (en particulier rayons X).

Le domaine spectral couvert est donné par la loi de Bragg :

$$\lambda = 2d \sin \theta$$

d désignant la distance entre les plans réticulaires. De la sorte, pour le réflecteur de Bragg 2 de l'exemple (monocristal de silicium orienté (111)), le double 2d de la distance vaut 0,627 nm.

Ainsi, l'angle $\alpha$ étant compris entre 5° et 80°, la plage de longueurs d'onde utilisable s'étend environ de 0,1 nm à 0,625 nm.

On obtient également de bons résultats en utilisant un monocristal de silicium orienté (311).

Selon une seconde mise en oeuvre, on fait fonctionner le système optique 1 en réseau de diffraction dans le domaine de l'ultraviolet sous vide. On envoie ainsi (figure 4) un faisceau incident 25 à une longueur d'onde supérieure à 0,6 nm. Ce faisceau incident 25 forme avec la normale 20, un angle $\alpha$ permettant

d'obtenir une grande efficacité dans l'ordre de diffraction utilisé, avantageusement supérieur ou égal à 70°, de manière à ce que le rayonnement incident soit quasi rasant. On maintient ainsi une efficacité importante. Le faisceau incident 25 interagit alors avec le réseau 3 de diffraction et produit des faisceaux diffractés 26 formant des angles $\beta$ avec la normale 20, ces angles de diffraction $\beta$ dépendant de l'ordre de diffraction considéré (le faisceau diffracté 26 représenté sur la figure 4 correspond par exemple à l'ordre-1).

On a vérifié le bon comportement du système optique 1 pour les deux modes de fonctionnement, respectivement en diffraction de Bragg et de Fresnel. Pour les tests effectués, la densité de traits 5 par mm vaut 1200 et la profondeur des traits 5 est égale à 7,2 nm.

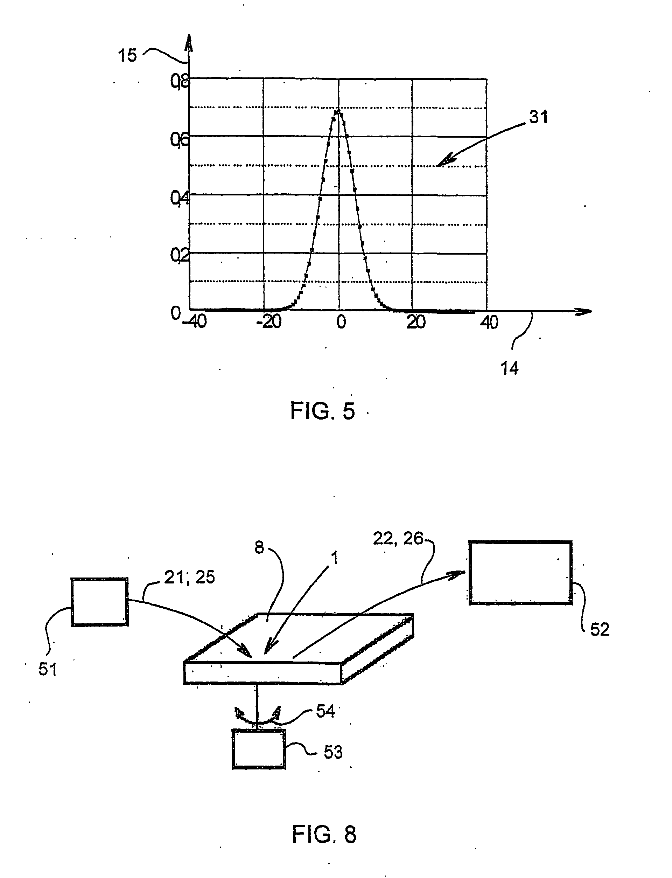

Ainsi, on a testé la réponse du système optique 1 pour une longueur d'onde fixe (0,154 nm) en fonction de l'angle d'incidence sur un tube à rayons X avec un goniomètre $\theta$-$2\theta$. Dans un tel montage, lorsque l'angle d'incidence varie de $\Delta\theta$, le détecteur est tourné de $2\Delta\theta$, de façon à satisfaire la loi de Bragg. On reporte (figure 5) en fonction de la différence de l'angle d'incidence à l'angle de Bragg (donné par la loi de Bragg, axe 14, en arcsecondes), la réflectivité pour la longueur d'onde de 0,154 nm. On observe que la courbe 31 obtenue a une largeur à *mi-hauteur* inférieure à 20 arcsecondes, le résultat étant équivalent à celui obtenu avec des cristaux de silicium classiques. Ceci valide l'utilisation du système optique 1 dans le domaine des rayons X.

Pour tester le mode de fonctionnement en réseau de diffraction, on a envoyé successivement deux faisceaux 25 monochromatiques à deux longueurs d'onde distinctes. Pour chacune d'entre elles, on a mesuré l'efficacité du réseau 3 dans. l'ordre -1 et +1 en fonction de l'angle d'incidence $\alpha$. De plus, k désignant l'ordre de diffraction, $\lambda$ représentant la longueur d'onde et N étant le nombre de traits 5 par mm du réseau 3, on a placé le détecteur à un angle tel que la loi des réseaux soit satisfaite :

$$\sin \alpha + \sin \beta = k \, N \, \lambda.$$

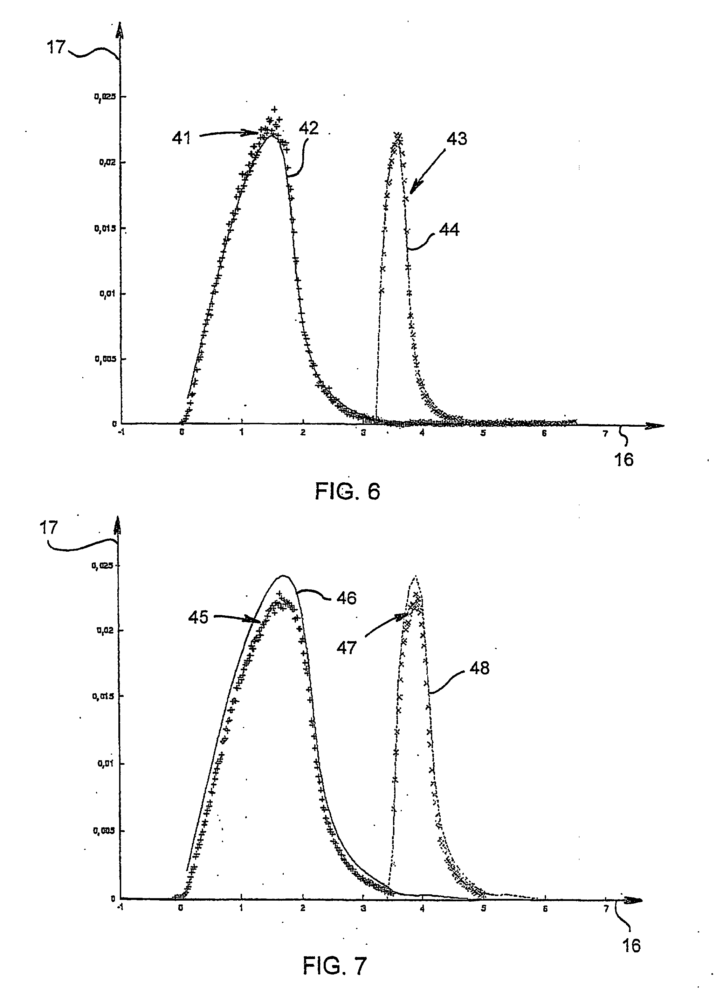

On représente ainsi pour la longueur d'onde de 1,33 nm (figure 6), l'efficacité (c'est-à-dire le rapport de l'intensité du flux du faisceau diffracté 26 à l'intensité du flux du faisceau incident 25, axe 17) en fonction de l'angle d'incidence (axe 16, en degrés). On obtient pour les ordres -1 et 1, respectivement des ensembles de points 41 et 43. On les compare respectivement à des courbes théoriques 42 et 44 calculées à partir des paramètres du réseau 3, déduits de mesures réalisées avec le microscope à effet tunnel. De même, pour une longueur d'onde de 1,55 nm (figure 7), on trace respectivement des ensembles de points 45 et 47 et les courbes théoriques correspondantes 46 et 48 pour les ordres -1 et +1 de diffraction.

On observe que les mesures obtenues sont très proches des courbes théoriques, ce qui valide le fonctionnement du système optique 1 en mode réseau de diffraction, celui-ci diffractant le rayonnement avec une efficacité notable.

On peut ainsi utiliser le système optique 1 dans un dispositif de mesure optique (figure 8) comprenant des moyens d'éclairage 51 de la surface 8 du système optique 1 et des moyens de récupération 52 de faisceaux renvoyés par le système optique 1 après diffraction des faisceaux incidents. Ce dispositif comprend aussi des moyens de rotation 53 relative du système optique par rapport aux faisceaux incidents, agissant sur le système optique 1 et/ou sur l'orientation des faisceaux incidents 21 ou 25, de manière à produire une rotation relative 54.

Par exemple, on émet avec les moyens d'éclairage 51, un faisceau de lumière monochromatique et on oriente grâce aux moyens de rotation 53, le système optique 1 par rapport au faisceau incident en mode de diffraction cristal (angle d'incidence $\alpha$ compris entre 5° et 80°) ou en mode de diffraction réseau (angle d'incidence $\alpha$ avantageusement supérieur ou égal à 70°), selon le domaine d'appartenance de la longueur d'onde du faisceau traité. On procède alors de manière classique en fonctionnement cristal ou en fonctionnement réseau avec les moyens de récupération 52.

Dans un autre exemple, les moyens d'éclairage 51 sont la sortie d'un synchrotron produisant un faisceau d'énergie polychromatique, et le système optique 1 ainsi que les moyens de récupération 52 sont utilisés comme monochromateur. Les moyens de récupération 52 comprennent notamment une fente de sélection de longueurs d'onde. On met alors en oeuvre le dispositif en mode de diffraction réseau ou de diffraction cristal, selon la ou les longueurs d'onde étudiées.

## Revendications

1. Procédé optique de diffraction de la lumière dans lequel :

   - on envoie au moins un faisceau incident (21, 25) de lumière ayant au moins une longueur d'onde sur une surface (8) d'un système optique (1) ayant une normale (20), selon une direction d'incidence formant un angle d'incidence ($\alpha$) par rapport à la normale (20), ledit système optique (1) comprenant un réflecteur de Bragg (2) et un réseau (3) gravé sur le réflecteur de Bragg (2) à ladite surface (8), et
   - on récupère au moins un faisceau renvoyé (22, 26) par le système optique (1) selon au moins une direction de diffraction formant un angle de diffraction ($\beta$) par rapport à la normale (20), après diffraction du faisceau incident (21, 25) par le système optique (1),

   caractérisé en ce que lesdites longueurs d'onde et ledit angle d'incidence ($\alpha$) d'au moins un des faisceaux incidents (21) sont tels que ledit faisceau incident (21) est diffracté par le réflecteur de Bragg (2) et/ou par le réseau.

2. Procédé optique selon la revendication 1, caractérisé en ce que le réflecteur de Bragg est un cristal.

3. Procédé optique selon l'une des revendications 1 ou 2, caractérisé en ce que ledit angle d'incidence ($\alpha$) est compris entre 5° et 80°.

4. Procédé optique selon l'une quelconque des revendications 1 à 3, caractérisé en ce que lesdites longueurs d'onde sont comprises entre 0,1 nm et 0,7 nm.

5. Procédé optique selon l'une quelconque des revendications 2 à 4, caractérisé en ce que le réflecteur de Bragg (2) est formé d'un monocristal de silicium orienté (111).

6. Procédé optique selon l'une quelconque des revendications précédentes, caractérisé en ce que le réseau (3) est recouvert d'une couche métallique (4).

7. Procédé optique selon l'une quelconque des revendications précédentes, caractérisé en ce que lesdites longueurs d'onde et ledit angle d'incidence ($\alpha$) d'au moins un autre des faisceaux incidents (25) sont tels que ledit faisceau incident (25) est diffracté par le réseau (3).

8. Procédé optique selon la revendication 7, caractérisé en ce que ledit angle d'incidence ($\alpha$) dudit autre faisceau incident (25) est au moins égal à 70°.

9. Procédé optique selon l'une des revendications 7 ou 8, caractérisé en ce que lesdites longueurs d'onde dudit autre faisceau incident (25) sont comprises entre 0,6 nm et 150 nm.

10. Procédé optique selon l'une quelconque des revendications précédentes, caractérisé en ce que lesdits faisceaux incidents sont des faisceaux de lumière polychromatique.

11. Procédé optique selon l'une quelconque des revendications 1 à 9, caractérisé en ce que lesdits faisceaux incidents sont des faisceaux de lumière monochromatique.

12. Système optique (1) comprenant un réflecteur de Bragg (2), caractérisé en ce qu'il comporte un réseau (3) de diffraction gravé sur le réflecteur de Bragg.

**13.** Système optique selon la revendication 12, **caractérisé en ce que** le réflecteur de Bragg est un cristal.

**14.** Système optique (1) selon la revendication 13, caractérisé en que le réflecteur de Bragg (2) est formé d'un monocristal de silicium.

**15.** Dispositif de mesure optique comprenant :

- un système optique (1) conforme à l'une des revendications 12 à 14,
- des moyens d'éclairage (51) de ladite surface (8) du système optique (1) au moyen d'au moins un faisceau incident (21, 25) de lumière,
- des moyens de récupération (52) d'au moins un faisceau renvoyé (22, 26) par le système optique (1) après diffraction desdits faisceaux incidents (21, 25) par le système optique (1), et
- des moyens de rotation (53) relative du système optique (1) par rapport auxdits faisceaux incidents (21, 25).

**16.** Utilisation du procédé de mesure optique selon l'une quelconque des revendications 1 à 11 ou du dispositif selon l'une des revendications 12 à 15, pour un étalonnage primaire pour la mesure de longueurs d'onde ou pour une dispersion dans un monochromateur.

**Patentansprüche**

**1.** Optisches Verfahren zur Lichtbeugung, bei dem:

- man mindestens einen einfallenden Strahl (21, 25), der mindestens eine Längenwelle hat, auf eine Fläche (8) eines optischen Systems (1) sendet, das eine Senkrechte (20) nach einer Einfallsrichtung hat, die einen Einfallswinkel ($\alpha$) zur Senkrechen (20) bildet, wobei das optische System (1) einen Bragg-Reflektor (2) umfasst und ein Gitter (3), das auf den Bragg-Reflektor (2) auf der Fläche (8) graviert ist, und
- man mindestens nach der Beugung des einfallenden Strahls (21, 25) durch das optische System (1) einen von dem optischen System (1). nach mindestens einer Beugungsrichtung, die einen Beugungswinkel ($\beta$) zur Senkrechten (20) bildet, zurückgeworfenen Strahl (22, 26) auffängt,

**dadurch gekennzeichnet, dass** die Wellenlängen und der Einfallswinkel ($\alpha$) mindestens eines der einfallenden Strahlen (21) derart sind, dass der einfallende Strahl (21) von dem Bragg-Reflektor (2) und/oder von dem Gitter gebeugt wird.

**2.** Optisches Verfahren nach Anspruch 1, **dadurch gekennzeichnet, dass** der Bragg-Reflektor ein Kristall ist.

**3.** Optisches Verfahren nach einem der Ansprüche 1 oder 2, **dadurch gekennzeichnet, dass** der Einfallswinkel ($\alpha$) zwischen 5° und 80° liegt.

**4.** Optisches Verfahren nach einem der Ansprüche 1 bis 3, **dadurch gekennzeichnet, dass** die Wellenlängen zwischen 0,1 nm und 0,7 nm liegen.

**5.** Optisches Verfahren nach einem der Ansprüche 2 bis 4, **dadurch gekennzeichnet, dass** der Bragg-Reflektor (2) aus einem Monokristall aus orientiertem Silizium (111) besteht.

**6.** Optisches Verfahren nach einem der vorhergehenden Ansprüche, **dadurch gekennzeichnet, dass** das Gitter (3) mit einer Metallschicht (4) abgedeckt ist.

**7.** Optisches Verfahren nach einem der vorhergehenden Ansprüche, **dadurch gekennzeichnet, dass** die Wellenlängen und der Einfallswinkel ($\alpha$) mindestens eines anderen der einfallenden Strahlen (25) derart sind, dass der einfallende Strahl (25) von dem Gitter (3) gebeugt wird.

**8.** Optisches Verfahren nach Anspruch 7, **dadurch gekennzeichnet, dass** der Einfallswinkel ($\alpha$) des anderen einfallenden Strahls (25) mindestens 70° beträgt.

**9.** Optisches Verfahren nach einem der Ansprüche 7 oder 8, **dadurch gekennzeichnet, dass** die Wellenlängen des anderen einfallenden Strahls (25) zwischen 0,6 nm und 150 nm liegen.

**10.** Optisches Verfahren nach einem der vorhergehenden Ansprüche, **dadurch gekennzeichnet, dass** die einfallenden Strahlen polychromatische Lichtstrahlen sind.

**11.** Optisches Verfahren noch einem der Ansprüche 1 bis 9, **dadurch gekennzeichnet, dass** die einfallenden Strahlen monochromatische Lichtstrahlen sind.

**12.** Optisches System (1) mit einem Bragg-Reflektor (2), **dadurch gekennzeichnet, dass** es ein Beugungsgitter (3) umfasst, das auf einen Bragg-Reflektor graviert ist.

**13.** Optisches System nach Anspruch 12, **dadurch gekennzeichnet, dass** der Bragg-Reflektor ein Kristall ist.

**14.** Optisches System (1) nach Anspruch 13, **dadurch gekennzeichnet, dass** der Bragg-Reflektor (2) aus einem Siliziummonokristall gebildet ist.

**15.** Optische Messvorrichtung zur optischen Messung mit:

- einem optischen System (1) nach einem der Ansprüche 12 bis 14,
- Beleuchtungsmitteln (51) der Fläche (8) des optischen Systems (1) mittels mindestens eines einfallenden Lichtstrahls (21, 25),
- Mitteln zum Auffangen (52) mindestens eines durch das optische System (1) zurückgeworfenen Strahls (22, 26) nach dem Beugen der einfallenden Strahlen (21, 25) durch das optische System (1) und
- Mittel zum relativen Drehen (53) des optischen Systems (1) zu den einfallenden Strahlen (21, 25).

**16.** Verwendung des optischen Messverfahrens nach einem der Ansprüche 1 bis 11 oder der Vorrichtung nach einem der Ansprüche 12 bis 15 für ein primäres Echen zur Messung von Wellenlängen oder zur Streuung in einem Monochromator.

**Claims**

**1.** A light diffraction optical method wherein:

- at least one incident light beam (21, 25) having at least a wavelength is sent onto a surface (8) of an optical system (1) having a normal axis (20), according to a direction of incidence forming an angle of incidence ($\alpha$) relative to said normal axis (20), said optical system (1) comprising a Bragg reflector (2) and a grating (3) etched on the Bragg reflector (2) at said surface (8), and
- at least one returned beam (22, 26) is collected by the optical system (1) according to at least one diffraction direction forming an angle of diffraction ($\beta$) with respect to the normal axis (20), after diffraction of the incident beam (21, 25) by the optical system (1),

  **characterised in that** said wavelengths and said angle of incidence ($\alpha$) of at least one of the incident beams (21) are such that said incident beam (21) is diffracted by the Bragg reflector (2) and/or by the grating.

**2.** An optical method according to claim 1, **characterised in that** the Bragg reflector is a crystal.

**3.** An optical method according to one of claims 1 or 2, **characterised in that** said angle of incidence ($\alpha$) is between 5° and 80°.

**4.** An optical method according to any one of claims 1 to 3, **characterised in that** said wavelengths are between 0.1 nm and 0.7 nm.

**5.** An optical method according to any one of claims 2 to 4, **characterised in that** the Bragg reflector (2) is made of an oriented silicon monocrystal (111).

**6.** An optical method according to any one of the previous claims, **characterised in that** the grating (3) is covered with a metallic layer (4).

**7.** An optical method according to any one of the previous claims, **characterised in that** said wavelengths and said angle of incidence ($\alpha$) of at least another of the incident beams (25) are such that said incident beam (25) is diffracted by the grating (3).

**8.** An optical method according to claim 7, **characterised in that** said angle of incidence ($\alpha$) of said other incident beam (25) is at least equai to 70°.

**9.** An optical method according to one of claims 7 or 8, **characterised in that** said wavelengths of said other incident beam (25) are between 0.6 nm and 150 nm.

**10.** An optical method according to any one of the previous claims, **characterised in that** said incident beams are polychromatic light beams.

**11.** An optical method according to any one of claims 1 to 9, **characterised in that** said incident beams are monochromatic light beams.

**12.** An optical system (1) comprising a Bragg reflector (2), **characterised in that** it comprises a diffraction grating (3) etched on the Bragg reflector.

**13.** An optical system according to claim 12, **characterised in that** the Bragg reflector is a crystal.

**14.** An optical system (1) according to claim 13, **characterised in that** the Bragg reflector (2) is made of a silicon monocrystal.

**15.** An optical measuring device comprising:

- an optical system (1) according to one of claims 12 to 14,
- means for lighting (51) said surface (8) of the optical system (1) by means of at least one incident light beam (21, 25),
- means for collecting (52) at least one returned beam (22, 26) by the optical system (1) after diffraction of said incident beams (21, 25) by the optical system (1), and

- rotation means (53) relative of the optical system (1) with respect to said incident beams (21, 25).

16. Use of the optical measuring method according to any one of the claims 1 to 11 or of the device according to one of claims 12 to 15, for a primary calibration for measuring wavelengths or for dispersion in a monochromator.

FIG. 1

FIG.2

FIG. 3

FIG. 4

FIG. 5

FIG. 8

FIG. 6

FIG. 7